# EUROPÄISCHE PATENTANMELDUNG

(11) **EP 2 410 217 A1**
(43) Veröffentlichungstag der Anmeldung: **25.01.2012**
(21) Anmeldenummer: 10007495.4
(22) Anmeldetag: 20.07.2010
(51) Int. Cl.: F16K 1/34, F16K 47/04, F01D 17/14

(54) **Ventil für eine Dampfturbine**

(71) Anmelder: Siemens Aktiengesellschaft, 80333 München (DE)
(72) Erfinder: Deister, Frank, 47877 Willich (DE); Musch, Christian, 45259 Essen (DE); Zimmer, Gerta, 45469 Mülheim an der Ruhr (DE); Ruda, Stanislaw, 47447 Moers (DE); Judith, Hans, 45481 Mülheim an der Ruhr (DE)

(57) **Zusammenfassung**

Die Erfindung betrifft ein Ventil (1) für eine Dampfturbine, wobei innerhalb des Gehäuses (2) der Dampfturbine zwei Ventilkörper (5, 6) angeordnet sind, die einen Ventil-Strömungskanal (12) zwischen dem Ventilkörper (5, 6) und einem Ventilsitz (8) ausbilden, der als Venturi-Düse ausgebildet ist.

## Beschreibung

Die Erfindung betrifft ein Ventil umfassend einen Ventilkörper und einen Ventilsitz, wobei der Ventilkörper beweglich in Richtung des Ventilsitzes ausgebildet ist, wobei zwischen dem Ventilkörper und dem Ventilsitz ein Ventilströmungskanal zum Durchströmen eines Strömungsmediums ausgebildet ist.

Im Maschinenbau, wie z.B. im Dampfturbinenbau, wird ein Strömungsmedium wie z.B. Dampf bei hohen Temperaturen und hohen Drücken über einen Einströmbereich in Dampfturbinen eingeströmt, Die hohen Temperaturen und hohen Drücke erfordern eine sorgfältige und sichere Technik für die Ventile, die für eine sichere Zufuhr des Dampfes in die Dampfturbine verantwortlich sind. Es wird unterschieden zwischen Schnellschluss- und Regelungsventilen. Schnellschlussventile schließen die Dampfzufuhr im Falle einer Störung schlagartig zu. Ein Regelventil regelt die Dampfzuführung fortwährend nach bestimmten Regelparametern.

Die Strömung durch das Ventil sollte eine möglichst gleichmäßige Beschleunigung oder Verzögerung aufweisen. Es sollte auf keinen Fall eine mehrfache Beschleunigung und Entspannung entlang des Ventilweges auftreten. Solche mehrfachen Beschleunigungen oder Entspannungen könnten zu Schwingungen des Dampfes führen und dadurch zu unnötigen Strömungsverlusten, die es zu vermeiden gilt.

Es ist Aufgabe der Erfindung ein Ventil anzugeben, das eine geringere Neigung zu Strömungsschwingungen aufzeigt.

Die Aufgabe wird gelöst durch ein Ventil umfassend einen Ventilkörper und einen Ventilsitz, wobei der Ventilkörper beweglich in Richtung des Ventilsitzes ausgebildet ist, wobei zwischen dem Ventilkörper und dem Ventilsitz ein Ventil-Strömungskanal zum Durchströmen eines Strömungsmediums ausgebildet ist, wobei der Ventil-Strömungskanal die ProfilForm einer Venturi-Düse aufweist.

Der erfindungsgemäße Gedanke liegt darin, dass die übliche Ausgestaltung eines Ventilsitzes, der geradlinig ausgebildet ist sowie der üblichen Ausgestaltung eine Ventilkörpers, der ebenfalls geradlinig ausgestaltet ist eine andere Form zu geben. Erfindungsgemäß wird vorgeschlagen, dass der durch den Ventilkörper und den Ventilsitz gebildeten Ventilströmungskanal eine Venturi-Düse gleicht. Das bedeutet, dass in einer ersten vorteilhaften Weiterbildung der Querschnitt des Ventil-Strömungskanals zunächst verengt und anschließend erweitert wird,

Vorteilhafte Weiterbildungen sind in den Unteransprüchen angegeben.

So ist es unter anderem vorteilhaft, wenn die Oberfläche des Ventilkörpers konkav ausgebildet ist. Das bedeutet, dass es einen Bereich auf der Oberfläche gibt, bei dem zwei Punkte die miteinander verbunden werden, nicht innerhalb des Ventilkörpers liegen.

In vorteilhafter Weise wird die Oberfläche des Ventilssitzes konvex ausgebildet. Das bedeutet, dass in einem Bereich des Ventilsitzes zwei Punkte auf der Oberfläche, die miteinander verbunden werden, eine Gerade bilden, die innerhalb des Ventilsitzes liegt. In einer besonders vorteilhaften Weiterbildung umfasst das Ventil zwei Ventilkörper.

Die Erfindung wird anhand eines Ausführungsbeispiels näher erläutert.

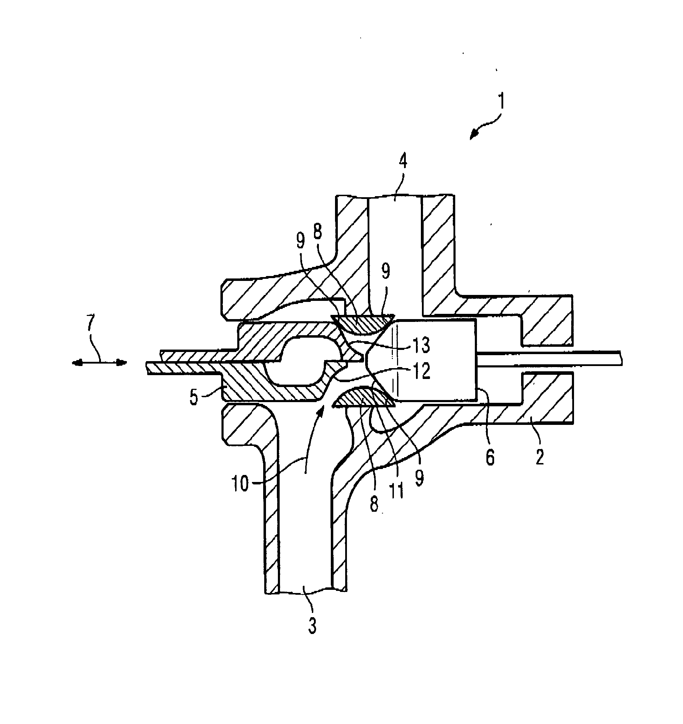

- Figur 1: Querschnittsansicht durch ein erfindungsgemäßes Ventil.

Die Figur 1 zeigt eine Querschnittsansicht eines erfindungsgemäßen Ventils 1, das beispielsweise als Ventil 1 für eine Dampfturbine, die nicht näher dargestellt ist, eingesetzt werden kann.

Im Wesentlichen umfasst das Ventil 1 ein Ventilgehäuse 2, das eine Einströmöffnung 3 und eine Ausströmöffnung 4 aufweist. Das Ventilgehäuse 2 ist unbeweglich an eine nicht näher dargestellte Dampfturbine über einen Flansch angeordnet. Die bewegbaren Teile sind ein erster Ventilkörper 5 und ein zweiter Ventilkörper 6. Sowohl der erste Ventilkörper 5 als auch der zweite Ventilkörper 6 können in einer axialen Richtung aufeinander und voneinander wegbewegt werden. Ein Ventilsitz 8 ist ortsfest mit dem Ventilgehäuse 2 kraftschlüssig verbunden und bietet eine Kontaktstelle 9 für den ersten Ventilkörper 5 und den zweiten Ventilkörper 6.

Die Funktionsweise dieses Ventils 1 wird nun näher erläutert. Über die Einströmöffnungen 3 strömt ein Strömungsmedium in einer Strömungsrichtung 10 zwischen dem ersten Ventilkörper 5 und dem Ventilsitz 8 hindurch, In der in Figur 1 gezeigten Ausführungsform zeigt der untere Teil des ersten Ventilkörpers 5 eine geöffnete Stellung des ersten Ventilkörpers und die oberhalb der geöffneten Stellung des ersten Ventilköpers 5 eine geschlossene Stellung des Ventilkörpers 5, da der erste Ventilkörper 5 einen Kontakt mit dem Ventilsitz 8 an der Kontaktstelle 9 aufweist und somit an dieser Stelle kein Dampf durchströmen kann, Insgesamt ist das Ventil nun mehr geschlossen, da auch der zweite Ventilkörper 6 eine Berührung mit dem Ventilsitz 8 an der Kontaktstelle 9 aufweist. Sofern der zweite Ventilkörper 6 nach rechts bewegt werden würde, würde zwischen einer Oberfläche 11 des zweiten Ventilkörpers 6 und dem Ventilsitz 8 ein Ventilströmungskanal ausgebildet, durch den ein Strömungsmedium durchströmen kann.

Erfindungsgemäß wird nun zwischen dem Ventilkörper 5 und dem Ventilsitz 8 ein Ventil-Strömungskanal 12 ausgebildet, der die Profilform einer Venturi-Düse aufweist. Das bedeutet, dass der Querschnitt des Ventil-Strömungskanals 12 zunächst verengt und anschließend erweitert wird. Der Ventil-Strömungskanal 12 bildet sich ebenso zwischen dem zweiten Ventilkörper 6 und dem gemeinsamen Ventilsitz 8 aus. Der Ventilsitz 8 ist ein Bauteil, das sowohl für den ersten Ventilkörper 5 als auch für den zweiten Ventilkörper 6 ausgebildet ist. Die Oberfläche 13 des ersten Ventilkörpers 5 ist konkav ausgebildet, d.h., dass in diesem Bereich zwei Punkte auf der Oberfläche 13 des ersten Ventilkörpers. 5 eine Gerade bilden, die außerhalb des ersten Ventilkörpers 5 liegt. Demgegenüber ist der Ventilsitz 8 konvex ausgebildet. Das bedeutet, dass zwei Punkte auf dem Ventilsitz 8 in diesem Bereich, die miteinander verbunden werden eine Gerade ergeben, wobei die Gerade innerhalb des ventilsitzes 8 liegt.

Die Kontur im Inneren des Ventils 1 wird durch Modifikation des ersten Ventilkörpers 5 und des zweiten Ventilkörpers 6 sowie des Ventilsitzes 8 verändert. Der erste Ventilkörper 5 und der zweite Ventilkörper 6 können auch als Ventilkegel bezeichnet werden. Die Modifikationen sind derart, dass eine Venturi-kontur, das bedeutet, dass zunächst eine Querschnittsverengung und dann eine Querschnittserweiterung vorliegen, erzeugt wird. Die Auslegung erfolgt bei einer Hubstellung von ca. 80% Öffnung. Bei dieser Ventilstellung liegt der Auslegungspunkt des Ventils 1. Durch die Veränderung der Kontur wird die Strömung zuerst kontinuierlich beschleunigt und dann gleichmäßig verzögert. Dadurch wird die Strömung besser geführt, was zu einer deutlich reduzierten Schwingungsneigung führt.

## Patentansprüche

1. Ventil (1) umfassend einen Ventilkörper (5, 6) und einen Ventilsitz (8), wobei der Ventilkörper (5, 6) beweglich in Richtung des Ventilsitzes (8) ausgebildet ist, wobei zwischen dem Ventilkörper (5, 6) und dem ventilsitz (8) ein Ventilströmungskanal (12) zum Durchströmen eines Strömungsmediums ausgebildet ist, **dadurch gekennzeichnet, dass**
der Ventilströmungskanal (12) die Profilform einer Venturi-Düse aufweist.

2. Ventil (1) nach Anspruch 1,
wobei ein Querschnitt des Ventilströmungskanals (12) zunächst verengt und anschließend erweitert wird.

3. Ventil (1) nach Anspruch 1 oder 2,
wobei die Oberfläche des Ventilkörpers (5, 6) konkav ausgebildet ist.

4. Ventil (1) nach Anspruch 1, .2 oder 3,
wobei die Oberfläche des Ventilsitzes (8) konvex ausgebildet ist.

5. Ventil (1) nach einem der vorhergehenden Ansprüche, wobei das Ventil (1) zwei Ventilkörper (5, 6) aufweist.

6. Ventil (1) nach Anspruch 5,
wobei beide Ventilkörper (5, 6) an einem gemeinsamen Ventilsitz (8) angeordnet sind.
